# EUROPEAN PATENT SPECIFICATION

(11) **EP 4 366 106 B1**
(45) Date of publication and mention of the grant of the patent: **31.12.2025**
(21) Application number: 23205791.9
(22) Date of filing: 25.10.2023
(51) Int. Cl.: H02J 1/08, B60L 53/50, H02J 1/10, H02J 7/00, H02M 1/36

(54) **CHARGING APPARATUS, CHARGING PILE, AND CHARGING SYSTEM**
LADEVORRICHTUNG, LADESÄULE UND LADESYSTEM
APPAREIL DE CHARGE, PILE DE CHARGE ET SYSTÈME DE CHARGE

(30) Priority: 26.10.2022 CN 202211315955
(43) Date of publication of application: 08.05.2024
(60) Divisional application: 25213195.8
(73) Proprietor: Huawei Digital Power Technologies Co., Ltd., Shenzhen, Guangdong 518043 (CN)
(72) Inventor: YANG, Jin, Shenzhen, 518043 (CN); LV, Zejie, Shenzhen, 518043 (CN); LIU, Yang, Shenzhen, 518043 (CN); LIU, Yaping, Shenzhen, 518043 (CN); CHEN, Jiansheng, Shenzhen, 518043 (CN)
(74) Representative: Epping - Hermann - Fischer

(56) References cited:
- EP-A1- 2 658 077
- EP-A1- 3 029 804
- WO-A1-2019/153305
- US-A1- 2020 006 970
- US-A1- 2020 136 384
- US-A1- 2020 336 077
- US-A1- 2022 161 677

## Description

### TECHNICAL FIELD

This application relates to the field of electronic technologies, and in particular, to a charging apparatus, a charging pile, and a charging system.

### BACKGROUND

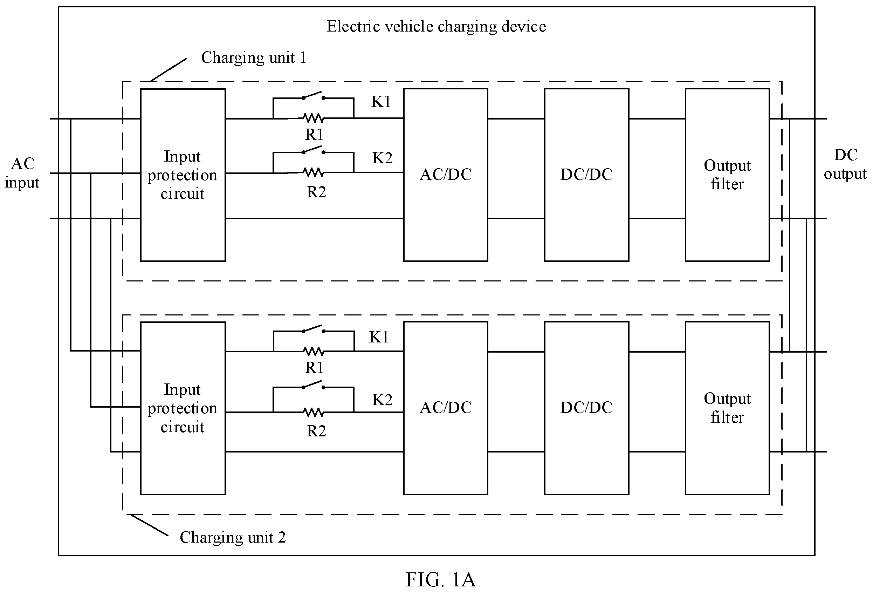

With rapid popularization of new energy vehicles, electric vehicle charging devices used as ancillary facilities become increasingly common. Due to a rapid increase in a charging power requirement of electric vehicles, it is a trend that electric vehicle charging devices are evolved to have high power. FIG. 1A is a schematic diagram of an architecture of an electric vehicle charging device. One other examples are WO2019153305 and US2020336077.

The electric vehicle charging device includes a plurality of charging units that are connected in parallel (a charging unit 1 and a charging unit 2 are used as an example in FIG. 1A). The plurality of charging units are connected in parallel, to implement a high-power output of the electric vehicle charging device. Each charging unit (for example, the charging unit 1 or the charging unit 2) includes an input protection circuit, an alternating current/direct current (alternating current/direct current, AC/DC) conversion circuit, a direct current/direct current (direct current/direct current, DC/DC) conversion circuit, and an output filter. A switch K1 and a resistor R1 that are connected in parallel are disposed between the input protection circuit and the AC/DC circuit, and a switch K2 and a resistor R2 that are connected in parallel are disposed between the input protection circuit and the AC/DC circuit. The switch K1, the resistor R1, the switch K2, and the resistor R2 together form a soft-start circuit of the charging unit, to implement current-limiting soft start for the charging unit. The current-limiting soft start may be understood as enabling the charging unit to be started in a current-limiting manner, to prevent a large impulse current from occurring in the charging unit when the electric vehicle charging device is started. However, in this solution, in a high-power output scenario of the electric vehicle charging device, a conventional resistor is used to perform current-limiting soft start. Transient power consumption generated by the electric vehicle charging device is large, and high-power resistors need to be connected in series or in parallel (that is, a plurality of resistors R1 and a plurality of resistors R2 need to be connected in series or in parallel), to implement soft start of the electric vehicle charging device. Consequently, a circuit volume of the electric vehicle charging device is large, and costs are high.

In addition, currently green energy such as energy of a photovoltaic apparatus and energy of an energy storage apparatus is increasingly widely integrated into a charging industry, and may provide more abundant electric energy for electric vehicles. However, conversion circuits of a plurality of levels are disposed in the electric vehicle charging device. When the electric vehicle charging device is connected to the photovoltaic apparatus or the energy storage apparatus, multi-level energy conversion needs to be performed (for example, the energy of the photovoltaic apparatus or the energy storage apparatus needs to be first inverted by a DC/AC conversion circuit, then be rectified by the AC/DC conversion circuit to be converted to a high-voltage direct current, and then undergo isolated conversion performed by the DC/DC conversion circuit to obtain electric energy), to convert the energy of the photovoltaic apparatus or the energy storage apparatus to the electric energy that may be used for charging the electric vehicles. Consequently, energy utilization efficiency of the photovoltaic apparatus or the energy storage apparatus is low.

In conclusion, how to reduce costs of the charging device and improve the energy utilization efficiency of the photovoltaic apparatus or the energy storage apparatus is an urgent technical problem to be resolved in this field.

### SUMMARY

This application provides a charging apparatus, a charging pile, and a charging system, to improve energy utilization efficiency of a photovoltaic apparatus or an energy storage apparatus, and reduce costs and a volume of the charging apparatus. The invention is defined by the features of the independent claims. Preferred embodiments are defined in the dependent claims.

According to a first aspect, an embodiment of this application provides a charging apparatus. The apparatus includes a positive bus, a negative bus, a DC/DC conversion circuit, and a soft-start circuit. The soft-start circuit is connected to an input end of the DC/DC conversion circuit through the positive bus and the negative bus, and the input end of the DC/DC conversion circuit is further connected to a photovoltaic apparatus or an energy storage apparatus through the positive bus and the negative bus. The soft-start circuit may pre-charge the positive bus and the negative bus. When a first voltage between the positive bus and the negative bus is greater than or equal to a first threshold, the DC/DC conversion circuit may perform power conversion on a second voltage received from the photovoltaic apparatus or the energy storage apparatus, and output the second voltage obtained after power conversion.

In this embodiment of this application, a process in which the soft-start circuit pre-charges the positive bus and the negative bus is a current-limiting soft start process of the charging apparatus. Soft start of the charging apparatus may be understood as that a power conversion circuit (for example, the DC/DC conversion circuit) in the charging apparatus is started in a current-limiting manner, to prevent a large impulse current from occurring in the power conversion circuit when the charging apparatus is started. When the first voltage between the positive bus and the negative bus is greater than or equal to the first threshold, the soft-start circuit is started, that is, a soft-start process of the charging apparatus is completed. In this case, the DC/DC conversion circuit in the charging apparatus starts to work (for example, perform power conversion on the second voltage received from the photovoltaic apparatus or the energy storage apparatus), so that a large impulse current may be effectively prevented from occurring in the DC/DC conversion circuit, protection for the DC/DC conversion circuit is implemented, and reliability of the charging apparatus may be improved.

It may be understood that a quantity of DC/DC conversion circuits is not limited in this embodiment of this application, and there may be one DC/DC conversion circuit, two DC/DC conversion circuits, or more DC/DC conversion circuits. High-voltage buses (namely, the positive bus and the negative bus) are disposed in the charging apparatus provided in this embodiment of this application, so that the DC/DC conversion circuit may be connected to the photovoltaic apparatus or the energy storage apparatus through the high-voltage buses, and the DC/DC conversion circuit may supply electric energy to a device after converting energy of the photovoltaic apparatus or the energy storage apparatus once. In comparison with a current technical solution in which the energy of the photovoltaic apparatus or the energy storage apparatus needs to be converted a plurality of times to supply electric energy to a corresponding device, this embodiment of this application can effectively improve energy utilization efficiency of the photovoltaic apparatus or the energy storage apparatus. In addition, a separate soft-start circuit is disposed in the charging apparatus, so that soft start of the charging apparatus may be implemented. When there are a plurality of DC/DC conversion circuits in the charging apparatus, current-limiting soft start of the plurality of DC/DC conversion circuits may be implemented by using the soft-start circuit. In comparison with the technical solution in FIG. 1A in which the soft-start circuit is separately disposed in each DC/DC conversion circuit, a volume and costs of the charging apparatus may be effectively reduced.

The charging apparatus provided in this embodiment of this application may implement a plurality of energy conversions, including but not limited to the following implementations:
Implementation 1: The charging apparatus further includes a rectifier conversion circuit and a control circuit. One end of the soft-start circuit is connected to the control circuit, and the other end is connected to one end of the rectifier conversion circuit through the positive bus and the negative bus. Therefore, the soft-start circuit may receive a third voltage from a power distribution system, perform power conversion on the third voltage, and input, under control of the control circuit, a third voltage obtained after power conversion to the rectifier conversion circuit. The third voltage obtained after power conversion may be used to pre-charge a first capacitor disposed at an output end of the rectifier conversion circuit.

It may be understood that a quantity of rectifier conversion circuits is not limited in this embodiment of this application. In some possible examples, the rectifier conversion circuit may include an AC/DC conversion circuit. In addition, the power distribution system in this embodiment of this application may be, for example, a power grid or a power supply system. Therefore, in some possible examples, the third voltage of the power distribution system may also be referred to as a mains voltage.

It may be understood that in this embodiment of this application, "a process in which the soft-start circuit inputs the third voltage obtained after power conversion to the rectifier conversion circuit, so that the third voltage obtained after power conversion is used to pre-charge the first capacitor disposed at the output end of the rectifier conversion circuit" is a start process of the rectifier conversion circuit. In implementation 1, in this case, the soft-start circuit receives the third voltage from the power distribution system, performs power conversion on the third voltage, and inputs the third voltage obtained after power conversion to the rectifier conversion circuit, so that the third voltage obtained after power conversion is used to pre-charge the first capacitor disposed at the output end of the rectifier conversion circuit, a large impulse current may be effectively prevented from occurring in the rectifier conversion circuit, protection for the rectifier conversion circuit is implemented, and reliability of the charging apparatus is further improved. Implementation 2: The charging apparatus further includes a rectifier conversion circuit and a control circuit. One end of the rectifier conversion circuit is connected to the control circuit, and the other end is connected to the input end of the DC/DC conversion circuit through the positive bus and the negative bus. Therefore, the rectifier conversion circuit may receive a fourth voltage from a power distribution system, perform power conversion on the fourth voltage, and input, under control of the control circuit, the fourth voltage obtained after power conversion to the DC/DC conversion circuit, so that the DC/DC conversion circuit may perform secondary power conversion on the fourth voltage obtained after power conversion, and output, under control of the control circuit, a fourth voltage obtained after secondary power conversion.

It may be understood that because the power distribution system in this embodiment of this application may be, for example, a power grid or a power supply system, the fourth voltage from the power distribution system may also be referred to as a mains voltage. The fourth voltage obtained after secondary power conversion may be used to provide electric energy for a terminal device, and may also be referred to as a charging voltage. Therefore, in implementation 2, one end of the rectifier conversion circuit is connected to the control circuit, and the other end is connected to the input end of the DC/DC conversion circuit through the positive bus and the negative bus. Therefore, the rectifier conversion circuit may receive the fourth voltage from the power distribution system, perform power conversion on the fourth voltage, and input, under control of the control circuit, the fourth voltage obtained after power conversion to the DC/DC conversion circuit, so that the DC/DC conversion circuit may perform secondary power conversion on the fourth voltage obtained after power conversion, and output, under control of the control circuit, the fourth voltage obtained after secondary power conversion. In this way, conversion from the mains voltage (namely, the fourth voltage from the power distribution system) to the charging voltage (namely, the fourth voltage obtained after secondary power conversion) may be implemented, so that the charging voltage provided by the charging apparatus for the terminal device is adapted to a charging requirement of the terminal device.

Implementation 3: The charging apparatus further includes a rectifier conversion circuit and a control circuit. One end of the rectifier conversion circuit is connected to the control circuit, and the other end is connected to the energy storage apparatus through the positive bus and the negative bus, so that the rectifier conversion circuit may receive a fifth voltage from a power distribution system, perform power conversion on the fifth voltage, and input, under control of the control circuit, the fifth voltage obtained after power conversion to the energy storage apparatus.

It may be understood that because the power distribution system in this embodiment of this application may be, for example, a power grid or a power supply system, the fifth voltage from the power distribution system may also be referred to as a mains voltage. The fifth voltage obtained after power conversion may be stored in the energy storage apparatus, and may also be referred to as energy of the energy storage apparatus. Therefore, in the implementation 3, one end of the rectifier conversion circuit is connected to the control circuit, and the other end is connected to the energy storage apparatus through the positive bus and the negative bus. Therefore, the rectifier conversion circuit may receive the fifth voltage from the power distribution system, perform power conversion on the fifth voltage, and input, under control of the control circuit, the fifth voltage obtained after power conversion to the energy storage apparatus. In this way, conversion from the mains voltage (namely, the fifth voltage from the power distribution system) to the energy (namely, the fifth voltage obtained after power conversion) of the energy storage apparatus may be implemented, so that the energy storage apparatus may store excess electric energy in the power distribution system, to reduce unnecessary resource waste.

In embodiments of this application, the control circuit may be at least one of a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, or a transistor logic device. The control circuit may implement or execute various example logical blocks, modules, and circuits described with reference to content disclosed in this application. The foregoing control circuit may alternatively be a combination implementing a computing function, for example, a combination including one or more microprocessors, or a combination of a DSP and a microprocessor.

The control circuit in the charging apparatus provided in this embodiment of this application may control circuits in the charging apparatus to be turned on or off, to implement soft start of the entire charging apparatus. The following describes control logic of the control circuit:

### 1. Control on the soft-start circuit:

In a possible implementation, the foregoing control circuit is connected to the soft-start circuit, so that the control circuit may send a first control signal to the soft-start circuit. The first control signal indicates to pre-charge the positive bus and the negative bus. Correspondingly, the soft-start circuit pre-charges the positive bus and the negative bus based on the first control signal, to implement a start process of the soft-start circuit, that is, implement the soft-start process of the charging apparatus. For example, the first control signal may further indicate a specific value of the first threshold.

Further, in a possible implementation, the soft-start circuit may further send a first response signal to the control circuit when the first voltage is greater than or equal to the first threshold. The first response signal indicates that the soft-start circuit is started. Correspondingly, the control circuit receives the first response signal, and may learn of a start status of the soft-start circuit of the charging apparatus.

### 2. Control on the DC/DC conversion circuit:

In a possible implementation, the charging apparatus only includes the control circuit and the DC/DC conversion circuit, and the control circuit is connected to the DC/DC conversion circuit, so that the control circuit may send a second control signal to the DC/DC conversion circuit when receiving the first response signal. The second control signal indicates to start the DC/DC conversion circuit. Correspondingly, the DC/DC conversion circuit receives the second control signal, is started based on the second control signal, and sends a second response signal to the control circuit. The second response signal indicates that the DC/DC conversion circuit is started. Optionally, the control circuit may send a third control signal to the soft-start circuit when receiving the second response signal. The third control signal indicates to disconnect the soft-start circuit.

In this implementation, after the soft-start circuit is started, the control circuit controls the DC/DC conversion circuit to be started, so that the current-limiting soft start of the DC/DC conversion circuit may be implemented, a large impulse current is effectively prevented from occurring in the DC/DC conversion circuit, and reliability of the charging apparatus is effectively improved.

### 3. Control on the rectifier conversion circuit and the DC/DC conversion circuit:

In a possible implementation, the control circuit, the DC/DC conversion circuit, and the rectifier conversion circuit are disposed in the charging apparatus, and the control circuit is separately connected to the DC/DC conversion circuit and the rectifier conversion circuit, so that the control circuit may send a fourth control signal to the rectifier conversion circuit when receiving the first response signal. The fourth control signal indicates to start the rectifier conversion circuit. The rectifier conversion circuit receives the fourth control signal, is started based on the fourth control signal, and sends a third response signal to the control circuit. The third response signal indicates that the rectifier conversion circuit is started. The control circuit sends a fifth control signal to the DC/DC conversion circuit when receiving the third response signal. The fifth control signal indicates to start the DC/DC conversion circuit. Further, the DC/DC conversion circuit receives the fifth control signal, is started based on the fifth control signal, and sends a fourth response signal to the control circuit. The fourth response signal indicates that the DC/DC conversion circuit is started. Optionally, the control circuit may send a sixth control signal to the soft-start circuit when receiving the fourth response signal. The sixth control signal indicates to disconnect the soft-start circuit.

In this implementation, after the soft-start circuit is started, the control circuit controls the rectifier conversion circuit to be started, so that the current-limiting soft start of the rectifier conversion circuit may be implemented, and the large impulse current is effectively prevented from occurring in the rectifier conversion circuit. In addition, after the rectifier conversion circuit is started, the control circuit controls the DC/DC conversion circuit to be started, so that the current-limiting soft start of the DC/DC conversion circuit may be implemented, and the large impulse current is effectively prevented from occurring in the DC/DC conversion circuit. In this way, reliability of the charging apparatus may be effectively improved.

In a possible implementation, the rectifier conversion circuit is any one of a full-bridge rectifier structure, three-phase Vienna rectifier structure, or the like. In this implementation, a plurality of structures of the rectifier conversion circuit are provided, so that the charging apparatus provided in this embodiment of this application may be flexibly implemented.

In a possible implementation, the input end of the rectifier conversion circuit includes at least two relays. The at least two relays may be configured to start the rectifier conversion circuit. In this implementation, at least two relays are disposed in the rectifier conversion circuit, so that the control circuit may control the start of the rectifier conversion circuit by controlling the at least two relays.

In a possible implementation, the DC/DC conversion circuit is any one of a full-bridge LLC structure, a half-bridge LLC structure, a flyback converter, or a buck conversion (BUCK) circuit. In this implementation, a plurality of structures of the DC/DC conversion circuit are provided, so that the charging apparatus provided in this embodiment of this application may be flexibly implemented.

In a possible implementation, an input end of the soft-start circuit is a single-phase input or a multi-phase input. In this way, the input end of the soft-start circuit may be flexibly implemented.

In a possible implementation, the foregoing first threshold is greater than or equal to a peak value of a voltage output by the rectifier conversion circuit, and is less than an undervoltage protection point of the DC/DC conversion circuit. In this way, a large impulse current may be further prevented from occurring in the power conversion circuit. It may be understood that the peak value of the voltage output by the rectifier conversion circuit may be a peak value 1 of a voltage output by the rectifier conversion circuit without being controlled by the control circuit, or may be a peak value 2 of the voltage output by the rectifier conversion circuit under control of the control circuit, where a specific value of the peak value 1 is less than a specific value of the peak value 2. If the first threshold is the peak value 1, when the rectifier conversion circuit or the DC/DC conversion circuit is started, an input voltage of the charging apparatus is less than or equal to a voltage difference between the positive bus and the negative bus, so that no impulse current flows through the rectifier conversion circuit or the DC/DC conversion circuit, and a good soft-start effect is implemented.

According to a second aspect, an embodiment of this application further provides a charging pile. The charging pile includes a charging apparatus and at least one charging terminal that is connected to the charging apparatus. Each of the at least one charging terminal is configured to be connected to an electric device. The charging apparatus includes a positive bus, a negative bus, a DC/DC conversion circuit, and a soft-start circuit. The soft-start circuit is connected to an input end of the DC/DC conversion circuit through the positive bus and the negative bus, and the input end of the DC/DC conversion circuit is further connected to a photovoltaic apparatus or an energy storage apparatus through the positive bus and the negative bus. The soft-start circuit is configured to pre-charge the positive bus and the negative bus. The DC/DC conversion circuit is connected to a first charging terminal in the at least one charging terminal, and is configured to: when a first voltage between the positive bus and the negative bus is greater than or equal to a first threshold, perform power conversion on a second voltage received from the photovoltaic apparatus or the energy storage apparatus, and output the second voltage obtained after power conversion to the first charging terminal, to charge the electric device that is connected to the first charging terminal.

For example, the charging terminal may include a housing, a human-computer interaction interface, and the like. The charging terminal is configured to perform information interaction, energy transmission, and the like with the electric device.

For example, the electric device may be, for example, an electric vehicle.

According to a third aspect, an embodiment of this application further provides a charging system. The charging system includes a charging apparatus and an electric device. The charging apparatus includes a positive bus, a negative bus, a DC/DC conversion circuit, and a soft-start circuit. The soft-start circuit is connected to an input end of the DC/DC conversion circuit through the positive bus and the negative bus, and the input end of the DC/DC conversion circuit is further connected to a photovoltaic apparatus or an energy storage apparatus through the positive bus and the negative bus. The soft-start circuit is configured to pre-charge the positive bus and the negative bus. The DC/DC conversion circuit is connected to the electric device, and is configured to: when a first voltage between the positive bus and the negative bus is greater than or equal to a first threshold, perform power conversion on a second voltage received from the photovoltaic apparatus or the energy storage apparatus, and output the second voltage obtained after power conversion to the electric device, to charge the electric device.

For beneficial effects of the second aspect and the third aspect, refer to related descriptions in the first aspect. Details are not described herein again.

### BRIEF DESCRIPTION OF DRAWINGS

FIG. 1A is a schematic diagram of an architecture of an electric vehicle charging device;
FIG. 1B is a schematic diagram of a scenario in which an electric vehicle charging device converts energy of a photovoltaic apparatus or an energy storage apparatus;
FIG. 2A is a schematic diagram of a structure of a charging apparatus according to an embodiment of this application;
FIG. 2B is a schematic diagram of a scenario in which a DC/DC conversion circuit 1 in a charging apparatus converts energy of a photovoltaic apparatus or an energy storage apparatus according to an embodiment of this application;
FIG. 2C is a schematic diagram of another structure of a charging apparatus according to an embodiment of this application;
FIG. 2D is a schematic diagram of another structure of a charging apparatus according to an embodiment of this application;
FIG. 3A is a schematic diagram of another structure of a charging apparatus according to an embodiment of this application;
FIG. 3B is a schematic diagram of another structure of a charging apparatus according to an embodiment of this application;
FIG. 4 is a schematic flowchart 1 of interaction between a control circuit and another circuit in a charging apparatus according to an embodiment of this application;
FIG. 5 is a schematic flowchart 2 of interaction between a control circuit and another circuit in a charging apparatus according to an embodiment of this application;
FIG. 6 is a schematic diagram of an energy conversion scenario of a charging apparatus according to an embodiment of this application;
FIG. 7A is a schematic diagram of another structure of a charging apparatus according to an embodiment of this application;
FIG. 7B is a schematic diagram of another structure of a charging apparatus according to an embodiment of this application;
FIG. 7C is a schematic diagram of another structure of a charging apparatus according to an embodiment of this application;
FIG. 8 is a schematic diagram of an output end of a rectifier conversion circuit according to an embodiment of this application; and
FIG. 9 is a schematic diagram of a structure of a charging system according to an embodiment of this application.

### DESCRIPTION OF EMBODIMENTS

In embodiments of this application, "soft start of a charging apparatus" may be understood as that a power conversion circuit (for example, a DC/DC conversion circuit 1) or another circuit in the charging apparatus is started after a soft-start circuit is started, to prevent a large impulse current from occurring in the power conversion circuit or the another circuit when the charging apparatus is started.

In embodiments of this application, "a process in which the soft-start circuit pre-charges a positive bus BUS+ and a negative bus BUS-" may be understood as a start process of the soft-start circuit, namely, a soft-start process of the charging apparatus.

A "connection" in embodiments of this application may be a direct connection, or may be a connection through one or more modules or one or more devices. For example, that A and B are connected, or A is connected to B may indicate that A is directly connected to B, or A is connected to B through C. C may represent one or more modules, or may represent one or more devices.

In embodiments of this application, "at least one" means one or more, and "a plurality of" means two or more. The term "and/or" describes an association relationship between associated objects and indicates that three relationships may exist. For example, A and/or B may indicate the following three cases: Only A exists, both A and B exist, and only B exists. "At least one of the following items (pieces)" or a similar expression thereof refers to any combination of these items (pieces), including a singular item (piece) or any combination of plural items (pieces).

In addition, it should be understood that, in the descriptions of this application, terms such as "first" and "second" are merely used for distinction in description, but should not be understood as an indication or implication of relative importance, and should not be understood as an indication or implication of a sequence.

It may be learned from related descriptions in the background that currently, a circuit volume of an electric vehicle charging device is large, and costs are high.

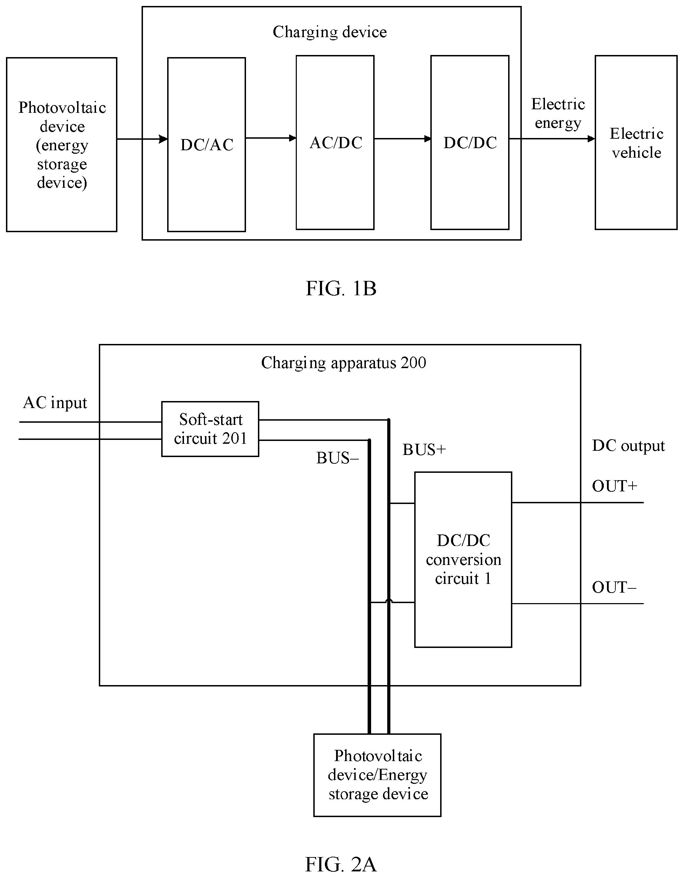

In addition, currently, green energy such as that of photovoltaic and energy storage is increasingly widely integrated into a charging industry, and may provide more abundant electric energy for electric vehicles. As shown in FIG. 1B, conversion circuits of a plurality of levels are disposed in an electric vehicle charging device, for example, a direct current/alternating current (direct current/alternating current, DC/AC) conversion circuit, an alternating current/direct current (alternating current/direct current, AC/DC) conversion circuit, and a direct current/direct current (direct current/direct current, DC/DC) conversion circuit. When the electric vehicle charging device is connected to a photovoltaic apparatus or an energy storage apparatus, multi-level energy conversion needs to be performed, to convert energy of the photovoltaic apparatus or the energy storage apparatus to electric energy that may charge electric vehicles. Consequently, energy utilization efficiency of the photovoltaic apparatus or the energy storage apparatus is low. Energy of the photovoltaic apparatus is used as an example. After the energy of the photovoltaic apparatus is input to a charging device, the energy is first inverted by the DC/AC conversion circuit, then is rectified by the AC/DC conversion circuit to be converted to a high-voltage direct current, and then undergoes isolated conversion performed by the DC/DC conversion circuit to obtain electric energy. The electric energy may supply power to the electric vehicle. In this entire energy conversion process, three power conversions are required. Consequently, the energy utilization efficiency of the photovoltaic apparatus is low.

In view of this, this application provides a charging apparatus 200. The charging apparatus 200 may improve energy utilization efficiency of a photovoltaic apparatus or an energy storage apparatus , and reduce a volume and costs of the charging apparatus. FIG. 2A is a schematic diagram of a structure of a charging apparatus according to an embodiment of this application. The charging apparatus 200 includes a soft-start circuit 201, a positive bus BUS+, a negative bus BUS-, and a DC/DC conversion circuit 1. The soft-start circuit 201 is connected to an input end of the DC/DC conversion circuit 1 through the positive bus BUS+ and the negative bus BUS-, and the input end of the DC/DC conversion circuit 1 may be further connected to the photovoltaic apparatus and/or the energy storage apparatus through the positive bus BUS+ and the negative bus BUS-. The soft-start circuit 201 may be configured to pre-charge the positive bus BUS+ and the negative bus BUS-. When a first voltage between the positive bus BUS+ and the negative bus BUS- is greater than or equal to a first threshold, the DC/DC conversion circuit 1 may perform power conversion on a second voltage received from the photovoltaic apparatus or the energy storage apparatus, and output the second voltage obtained after power conversion.

For example, as shown in FIG. 2A, an input of the soft-start circuit 201 is an alternating current (AC) voltage, so that the soft-start circuit 201 may process (for example, perform rectification or power conversion) the alternating current voltage to obtain a corresponding direct current voltage, and pre-charge the positive bus BUS+ and the negative bus BUS- by using the direct current voltage, to implement current-limiting soft start of the charging apparatus 200. In addition, the DC/DC conversion circuit 1 performs power conversion on the second voltage received from the photovoltaic apparatus or the energy storage apparatus. The second voltage obtained after power conversion is a direct current (DC) voltage, and may be output to a terminal device, to provide a charging voltage for the terminal device. The positive bus BUS+ and the negative bus BUS- in this embodiment of this application may be, for example, direct current buses, and may carry a direct current voltage (for example, the second voltage described above) output from the photovoltaic apparatus or the energy storage apparatus, and input the direct current voltage to the DC/DC conversion circuit in the charging apparatus 200.

It may be learned from the foregoing description that a process in which the soft-start circuit 201 pre-charges the positive bus BUS+ and the negative bus BUS- is a soft-start process of the charging apparatus 200. When the first voltage between the positive bus BUS+ and the negative bus BUS- is greater than or equal to the first threshold, the soft-start circuit 201 is started, that is, the soft-start process of the charging apparatus 200 is completed. Therefore, in this case, the DC/DC conversion circuit 1 in the charging apparatus 200 starts to start (that is, performs power conversion on the second voltage received from the photovoltaic apparatus or the energy storage apparatus), so that the current-limiting soft start of the DC/DC conversion circuit 1 is implemented, a large impulse current may be effectively prevented from occurring in the DC/DC conversion circuit 1, and reliability of the charging apparatus 200 may be improved.

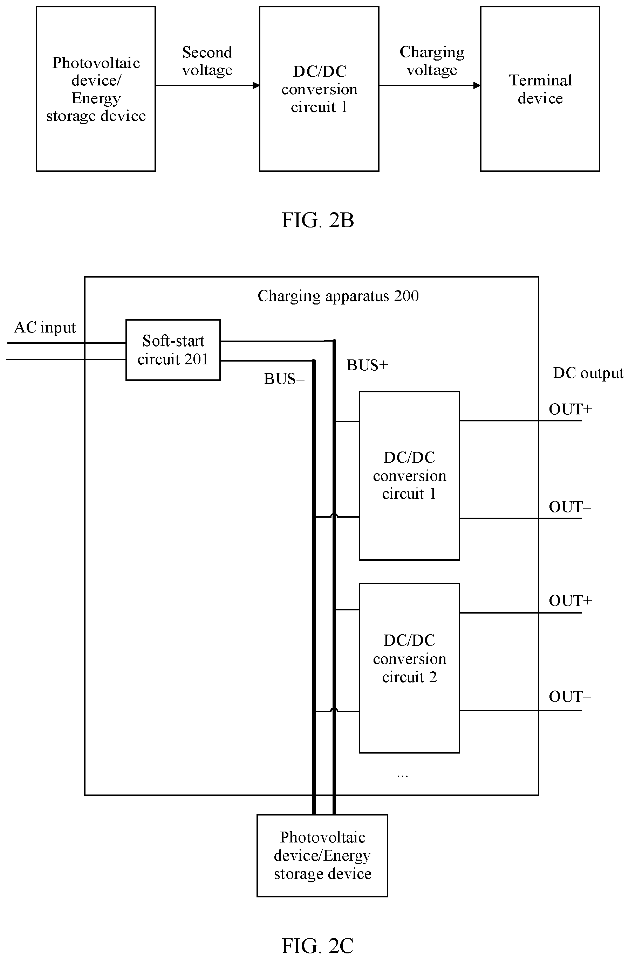

In this embodiment of this application, the positive bus BUS+ and the negative bus BUS- are disposed in the charging apparatus 200, and the positive bus BUS+ and the negative bus BUS- are designed in a pooling manner (that is, energy of different apparatuses may be gathered to the positive bus BUS+ and the negative bus BUS- to form an energy pool). Therefore, the photovoltaic apparatus and/or the energy storage apparatus may be overlaid on the positive bus BUS+ and the negative bus BUS-, so that the DC/DC conversion circuit may be connected to the photovoltaic apparatus or the energy storage apparatus through the positive bus BUS+ and the negative bus BUS-, and the DC/DC conversion circuit 1 may supply electric energy to the terminal device after converting the energy of the photovoltaic apparatus or the energy storage apparatus. For ease of understanding, FIG. 2B is a schematic diagram of a scenario in which the charging apparatus 200 converts the energy of the photovoltaic apparatus or the energy storage apparatus according to an embodiment of this application. As shown in FIG. 2B, the DC/DC conversion circuit 1 is connected to the photovoltaic apparatus or the energy storage apparatus. Therefore, the DC/DC conversion circuit 1 only needs to perform power conversion once on the second voltage after receiving the second voltage from the photovoltaic apparatus or the energy storage apparatus, to obtain a charging voltage and output the charging voltage to the terminal device. In this way, the charging apparatus 200 only needs to convert the energy (namely, the second voltage) of the photovoltaic apparatus or the energy storage apparatus once. In comparison with the technical solution in FIG. 1B in which the energy of the photovoltaic apparatus or the energy storage apparatus is converted three times, energy utilization efficiency of the photovoltaic apparatus or the energy storage apparatus may be effectively improved.

It may be understood that a quantity of DC/DC conversion circuits in the charging apparatus 200 is not limited in this embodiment of this application. In FIG. 2A, only one DC/DC conversion circuit (namely, the DC/DC conversion circuit 1) is used as an example for description. As shown in FIG. 2C, the charging apparatus 200 may include two DC/DC conversion circuits (namely, a DC/DC conversion circuit 1 and a DC/DC conversion circuit 2). In another possible embodiment, the charging apparatus 200 may further include three or more DC/DC conversion circuits, which is not listed one by one herein. The soft-start circuit 201 in the charging apparatus 200 is disposed independently of the DC/DC conversion circuit. Therefore, when there are a plurality of DC/DC conversion circuits disposed in the charging apparatus 200, current-limiting soft start of the plurality of DC/DC conversion circuits may be implemented by using the soft-start circuit 201. In comparison with the technical solution in FIG. 1A in which the soft-start circuit 201 is separately disposed in each DC/DC conversion circuit, a volume and costs of the charging apparatus 200 may be effectively reduced.

A specific implementation of a photovoltaic apparatus is not limited in this embodiment of this application, and may be any manner that can implement a photovoltaic function. For example, the photovoltaic apparatus may include at least one photovoltaic array, and each of the at least one photovoltaic array includes one positive end and one negative end. Correspondingly, that the input end of the DC/DC conversion circuit 1 is connected to the photovoltaic apparatus through the positive bus BUS+ and the negative bus BUS- may specifically include: The input end of the DC/DC conversion circuit 1 is connected to the positive end of each photovoltaic array through the positive bus BUS+, and the input end of the DC/DC conversion circuit 1 is connected to the negative end of each photovoltaic array through the negative bus BUS-.

A specific implementation of the energy storage apparatus is not limited in this embodiment of this application, and may be any manner that can implement a function of storing electric energy. For example, in this embodiment of this application, the energy storage apparatus may be, for example, an energy storage battery pack or an energy storage converter.

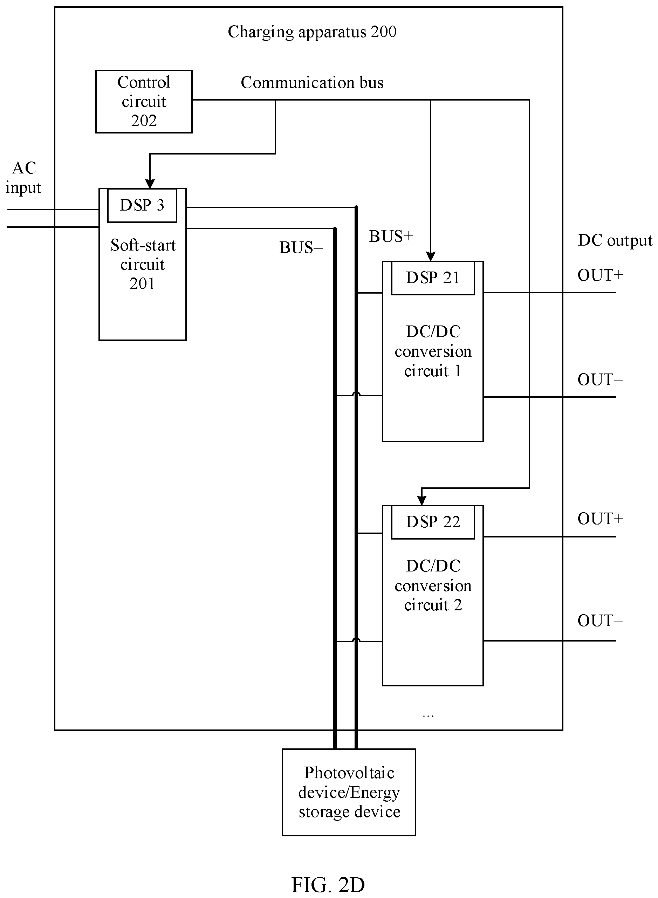

Refer to FIG. 2D. A charging apparatus 200 provided in this embodiment of this application may further include a control circuit 202. In FIG. 2D, the control circuit 202 is communicatively connected to a soft-start circuit 201, a DC/DC conversion circuit 1, and a DC/DC conversion circuit 2 separately, so that the control circuit 202 may control the soft-start circuit 201, the DC/DC conversion circuit 1, and the DC/DC conversion circuit 2 to be turned on or off, to implement soft start of the charging apparatus 200.

In this embodiment of this application, specific hardware implementation of the control circuit 202 may be implemented by using a field-programmable gate array (field-programmable gate array, FPGA), an application-specific integrated chip (application specific integrated chip, ASIC), a system on chip (system on chip, SoC), a central processing unit (central processing unit, CPU), a network processor (network processor, NP), a digital signal processing processor (digital signal processor, DSP), a micro controller unit (micro controller unit, MCU), a programmable logic device (programmable logic device, PLD), or another integrated chip. The foregoing control circuit 202 may alternatively be a combination implementing a computing function, for example, a combination including one or more microprocessors, or a combination of a DSP and a microprocessor.

For example, still refer to FIG. 2D. A DSP is used as an example of the control circuit 202. In this case, a DSP 21 may be disposed in the DC/DC conversion circuit 1, a DSP 22 may be disposed in the DC/DC conversion circuit 2, and a DSP 3 may be disposed in the soft-start circuit 201, so that the control circuit 202 may be communicated and interacted with the DSP 21, the DSP 22, and the DSP 3 through a communication bus, to implement control of the control circuit 202 on the soft-start circuit 201, the DC/DC conversion circuit 1, and the DC/DC conversion circuit 2. For example, after controlling the soft-start circuit 201 to be started, the control circuit 202 controls the DC/DC conversion circuit 1 and the DC/DC conversion circuit 2 to be started, to implement the soft start of the charging apparatus 200.

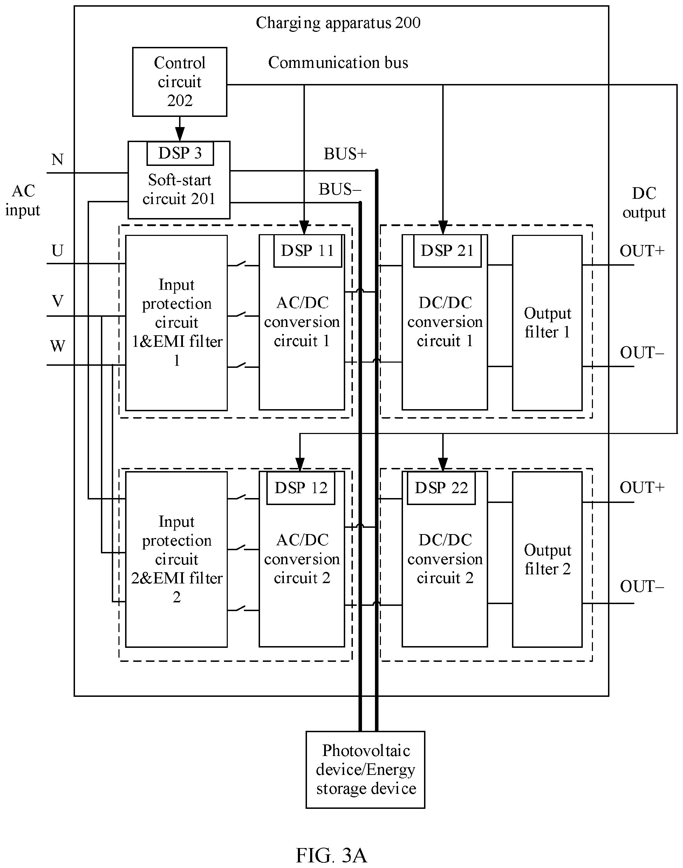

A charging apparatus provided in this embodiment of this application may further include a rectifier conversion circuit (which may be, for example, an AC/DC conversion circuit). For example, FIG. 3A is a schematic diagram of another structure of a charging apparatus according to an embodiment of this application. In FIG. 3A, the AC/DC conversion circuit is used as an example of the rectifier conversion circuit. Correspondingly, the charging apparatus 200 further includes an AC/DC conversion circuit 1 and an AC/DC conversion circuit 2. It should be understood that a quantity of rectifier conversion circuits in the charging apparatus 200 is not limited in this embodiment of this application. In FIG. 3A, only two rectifier conversion circuits (namely, the AC/DC conversion circuit 1 and the AC/DC conversion circuit 2) are used as an example for description.

In the charging apparatus 200, the quantity of rectifier conversion circuits may be the same as or different from a quantity of DC/DC conversion circuits.

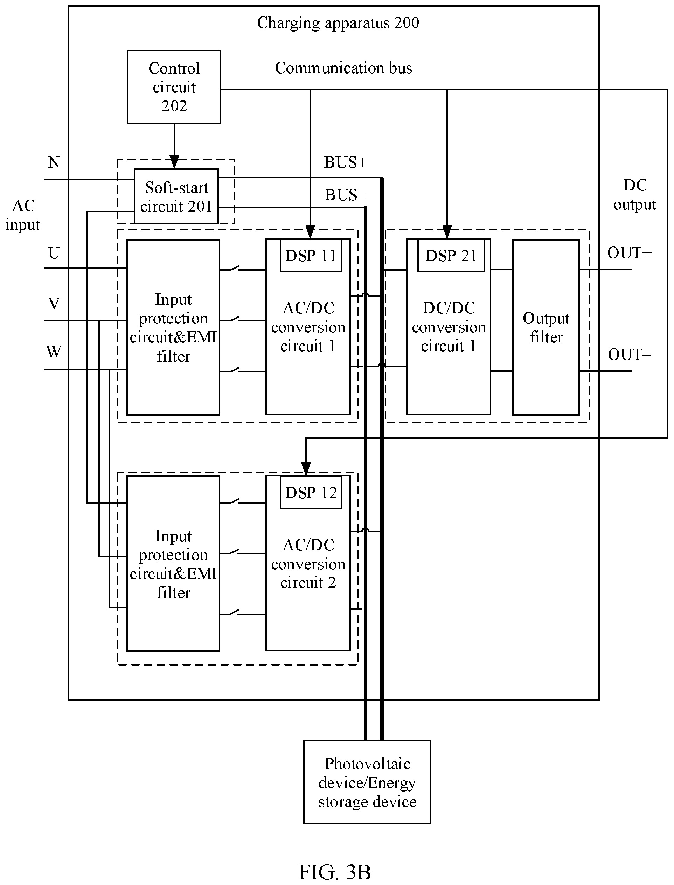

Example 1: As shown in FIG. 3A, in the charging apparatus 200, the quantity of rectifier conversion circuits is the same as the quantity of DC/DC conversion circuits. The rectifier conversion circuits include the AC/DC conversion circuit 1 and the AC/DC conversion circuit 2, and the DC/DC conversion circuits include a DC/DC conversion circuit 1 and a DC/DC conversion circuit 2. The DC/DC conversion circuit 1 may receive a voltage output by the AC/DC conversion circuit 1 and a voltage output by the AC/DC conversion circuit 2, and perform corresponding power conversion. Similarly, the DC/DC conversion circuit 2 may receive the voltage output by the AC/DC conversion circuit 1 and the voltage output by the AC/DC conversion circuit 2, and perform corresponding power conversion. Example 2: As shown in FIG. 3B, in the charging apparatus 200, the quantity of rectifier conversion circuits is different from the quantity of DC/DC conversion circuits. The rectifier conversion circuits include the AC/DC conversion circuit 1 and the AC/DC conversion circuit 2, and the DC/DC conversion circuit includes a DC/DC conversion circuit 1. Therefore, the DC/DC conversion circuit 1 may receive voltages output by the AC/DC conversion circuit 1 and the AC/DC conversion circuit 2, and perform corresponding power conversion. In this way, the DC/DC conversion circuit 1 may implement a high-power output, and may meet a charging requirement in a high-power charging scenario. Correspondingly, in FIG. 3A, a control circuit 202 may be communicatively connected to a soft-start circuit 201, the AC/DC conversion circuit 1, the AC/DC conversion circuit 2, the DC/DC conversion circuit 1, and the DC/DC conversion circuit 2 separately, so that the control circuit 202 may control at least one of the soft-start circuit 201, the AC/DC conversion circuit 1, the AC/DC conversion circuit 2, the DC/DC conversion circuit 1, and the DC/DC conversion circuit 2 to be turned on or off, to implement soft start of the charging apparatus 200. For example, still refer to FIG. 3A. A DSP is used as an example of the control circuit 202. In this case, a DSP 11 may be disposed in the AC/DC conversion circuit 1, a DSP 12 may be disposed in the AC/DC conversion circuit 2, a DSP 21 may be disposed in the DC/DC conversion circuit 1, a DSP 22 may be disposed in the DC/DC conversion circuit 2, and a DSP 3 may be disposed in the soft-start circuit 201, so that the control circuit 202 may be communicated and interacted with the DSP 11, the DSP 12, the DSP 21, the DSP 22, and the DSP 3 through a communication bus, to implement control of the control circuit 202 on the soft-start circuit 201, the AC/DC conversion circuit 1, the AC/DC conversion circuit 2, the DC/DC conversion circuit 1, and the DC/DC conversion circuit 2, and implement a soft-start process of the charging apparatus 200. For example, after controlling the soft-start circuit 201 to be started, the control circuit 202 controls the AC/DC conversion circuit 1 and the AC/DC conversion circuit 2 to be started; and after the AC/DC conversion circuit 1 and the AC/DC conversion circuit 2 are started, the control circuit 202 controls the DC/DC conversion circuit 1 and the DC/DC conversion circuit 2 to be started, to implement the soft-start process of the charging apparatus 200.

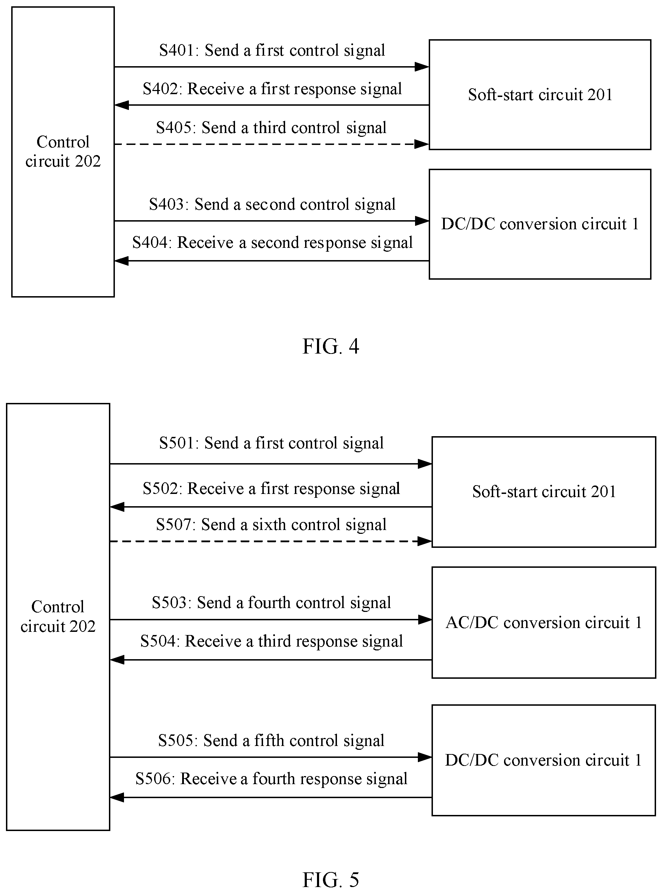

It may be learned from FIG. 2D and FIG. 3A that the charging apparatus 200 provided in this application may include the rectifier conversion circuit, or the charging apparatus 200 may not include the rectifier conversion circuit. It may be understood that, in these two cases, communication interaction processes of the control circuit 202 and circuits in the charging apparatus 200 are different. The following separately describes the two cases:
Case 1: Refer to FIG. 4. When the charging apparatus 200 includes the control circuit 202 and the DC/DC conversion circuit 1, but does not include the rectifier conversion circuit, a communication interaction process of the control circuit 202 and the circuits in the charging apparatus 200 includes the following steps.

S401: The control circuit 202 sends a first control signal to the soft-start circuit 201, where the first control signal indicates to pre-charge a positive bus BUS+ and a negative bus BUS-. Correspondingly, the soft-start circuit 201 receives the first control signal.

After receiving the first control signal, the soft-start circuit 201 may pre-charge the positive bus BUS+ and the negative bus BUS- based on the first control signal. For example, the first control signal may further indicate a specific value of a first threshold of a first voltage between the positive bus BUS+ and the negative bus BUS-. The first threshold may be, for example, 700 V Therefore, the soft-start circuit 201 pre-charges the positive bus BUS+ and the negative bus BUS-, and stops pre-charging when the first voltage between the positive bus BUS+ and the negative bus BUS-is greater than or equal to 700 V, to complete a start process of the soft-start circuit 201.

S402: The soft-start circuit 201 sends a first response signal to the control circuit 202 when the first voltage is greater than or equal to the first threshold, where the first response signal indicates that the soft-start circuit 201 is started. Correspondingly, the control circuit 202 receives the first response signal.

In S402, the control circuit 202 receives the first response signal, and may learn of a start status of the soft-start circuit 201.

S403: The control circuit 202 sends a second control signal to the DC/DC conversion circuit 1 when receiving the first response signal, where the second control signal indicates to start the DC/DC conversion circuit 1. Correspondingly, the DC/DC conversion circuit 1 receives the second control signal.

After receiving the second control signal, the DC/DC conversion circuit 1 starts to start in response to the second control signal.

In S403, after the soft-start circuit 201 is started, the control circuit 202 controls the DC/DC conversion circuit 1 to be started, so that current-limiting soft start of the DC/DC conversion circuit 1 may be implemented, a large impulse current is effectively prevented from occurring in the DC/DC conversion circuit 1, and reliability of the charging apparatus 200 is effectively improved.

S404: The DC/DC conversion circuit 1 sends a second response signal to the control circuit 202, where the second response signal indicates that the DC/DC conversion circuit 1 is started.

In S404, the control circuit 202 receives the second response signal, and may learn of a start status of the DC/DC conversion circuit 1.

Optionally, the foregoing process further includes the following step. S405: The control circuit 202 sends a third control signal to the soft-start circuit 201 when receiving the second response signal, where the third control signal indicates to disconnect the soft-start circuit 201. Correspondingly, the soft-start circuit 201 receives the third control signal, and starts to disconnect.

Case 2: Refer to FIG. 5. When the charging apparatus 200 includes the control circuit 202, the DC/DC conversion circuit 1, and the AC/DC conversion circuit 1 (namely, the rectifier conversion circuit), a communication interaction process of the control circuit 202 and the circuits in the charging apparatus 200 includes the following steps.

S501: The control circuit 202 sends a first control signal to the soft-start circuit 201, where the first control signal indicates to pre-charge a positive bus BUS+ and a negative bus BUS-. Correspondingly, the soft-start circuit 201 receives the first control signal.

After receiving the first control signal, the soft-start circuit 201 may pre-charge the positive bus BUS+ and the negative bus BUS- based on the first control signal. For example, the first control signal may further indicate a specific value of a first threshold of a first voltage between the positive bus BUS+ and the negative bus BUS-. The first threshold may be, for example, 700 V Therefore, the soft-start circuit 201 pre-charges the positive bus BUS+ and the negative bus BUS-, and stops pre-charging when the first voltage between the positive bus BUS+ and the negative bus BUS-is greater than or equal to 700 V, to complete a start process of the soft-start circuit 201.

S502: The soft-start circuit 201 sends a first response signal to the control circuit 202 when the first voltage is greater than or equal to the first threshold, where the first response signal indicates that the soft-start circuit 201 is started. Correspondingly, the control circuit 202 receives the first response signal.

In S502, the control circuit 202 receives the first response signal, and may learn of a start status of the soft-start circuit 201.

S503: The control circuit 202 sends a fourth control signal to the AC/DC conversion circuit 1 when receiving the first response signal, where the fourth control signal indicates to start the AC/DC conversion circuit 1. Correspondingly, the AC/DC conversion circuit 1 receives the fourth control signal.

After receiving the fourth control signal, the AC/DC conversion circuit 1 starts to start in response to the fourth control signal.

In S503, after the soft-start circuit 201 is started, the control circuit 202 controls the AC/DC conversion circuit 1 to be started, so that current-limiting soft start of the AC/DC conversion circuit 1 may be implemented, a large impulse current is effectively prevented from occurring in the AC/DC conversion circuit 1, and reliability of the charging apparatus 200 is effectively improved.

S504: The AC/DC conversion circuit 1 sends a third response signal to the control circuit 202, where the third response signal indicates that the AC/DC conversion circuit 1 is started.

In S504, the control circuit 202 receives the third response signal, and may learn of a start status of the AC/DC conversion circuit 1.

S505: The control circuit 202 sends a fifth control signal to the DC/DC conversion circuit 1 when receiving the third response signal, where the fifth control signal indicates to start the DC/DC conversion circuit 1. Correspondingly, the DC/DC conversion circuit 1 receives the fifth control signal.

After receiving the fifth control signal, the DC/DC conversion circuit 1 starts to start in response to the fifth control signal.

In S505, after the AC/DC conversion circuit 1 is started, the control circuit 202 controls the DC/DC conversion circuit 1 to be started start, so that current-limiting soft start of the DC/DC conversion circuit 1 may be implemented, a large impulse current is effectively prevented from occurring in the DC/DC conversion circuit 1, and the reliability of the charging apparatus 200 is effectively improved.

S506: The DC/DC conversion circuit 1 sends a fourth response signal to the control circuit 202, where the fourth response signal indicates that the DC/DC conversion circuit 1 is started.

In S506, the control circuit 202 receives the fourth response signal, and may learn of a start status of the DC/DC conversion circuit 1.

Optionally, the foregoing process further includes the following step. S507: The control circuit 202 sends a sixth control signal to the soft-start circuit 201 when receiving the fourth response signal, where the sixth control signal indicates to disconnect the soft-start circuit 201. Correspondingly, the soft-start circuit 201 receives the sixth control signal, and starts to disconnect.

Further, in a possible implementation, the foregoing first threshold is greater than or equal to a peak value of a voltage output by the rectifier conversion circuit, and is less than an undervoltage protection point of the DC/DC conversion circuit. In this way, a large impulse current may be further prevented from occurring in the power conversion circuit. It may be understood that the peak voltage output by the rectifier conversion circuit may be a peak value 1 of a voltage output by the rectifier conversion circuit without being controlled by the control circuit 202, or may be a peak value 2 of a voltage output by the rectifier conversion circuit under control of the control circuit 202, where a specific value of the peak value 1 is less than a specific value of the peak value 2. If the first threshold is the peak value 1, when the rectifier conversion circuit or the DC/DC conversion circuit is started, an input voltage of the charging apparatus 200 is less than or equal to a voltage difference between the positive bus and the negative bus, so that no impulse current flows through the rectifier conversion circuit or the DC/DC conversion circuit, and a good soft-start effect is implemented.

Optionally, as shown in FIG. 3A, an input protection circuit 1 and an electromagnetic interference (electromagnetic interference, EMI) filter 1 may be further disposed at an input end of the AC/DC conversion circuit 1, to perform filter processing on a voltage input to the AC/DC conversion circuit 1 to reduce electromagnetic interference. An input protection circuit 2 and an EMI filter 2 may be further disposed at the input end of the AC/DC conversion circuit 1, to perform filter processing on the voltage input to the AC/DC conversion circuit 1 to reduce the electromagnetic interference. In addition, an output filter 1 may be disposed in the DC/DC conversion circuit 1, and the output filter 1 may perform filter processing on a voltage output by the DC/DC conversion circuit 1. An output filter 2 may be disposed in the DC/DC conversion circuit 2, and the output filter 2 may perform filter processing on the voltage output by the DC/DC conversion circuit 2.

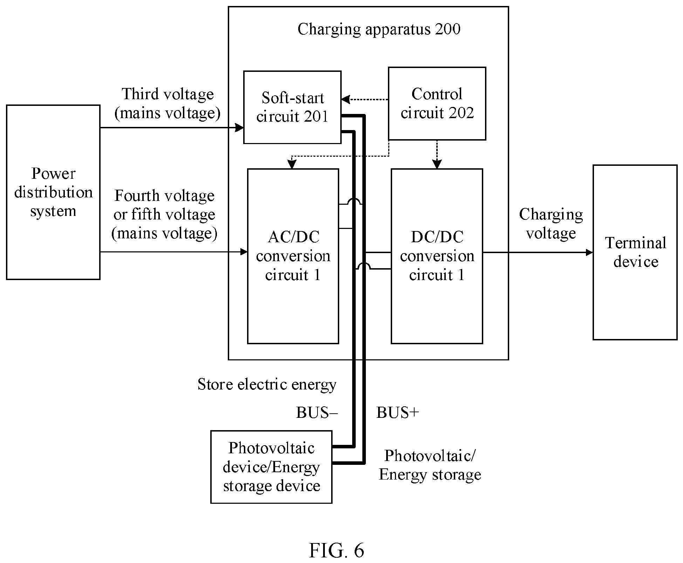

When a charging apparatus 200 provided in this embodiment of this application is connected to a power distribution system, a photovoltaic apparatus, and/or an energy storage apparatus, a plurality of energy conversion paths may be implemented, to implement a free and efficient flow of energy between mains, photovoltaic, and energy storage. For example, FIG. 6 is a schematic diagram of a scenario of a charging apparatus according to an embodiment of this application. In FIG. 6, the charging apparatus 200 includes a soft-start circuit 201, a control circuit 202, an AC/DC conversion circuit 1, and a DC/DC conversion circuit 1. The control circuit 202 may be communicatively connected to the soft-start circuit 201, the AC/DC conversion circuit 1, and the DC/DC conversion circuit 1 separately. The AC/DC conversion circuit 1 is separately connected to the soft-start circuit 201 and the DC/DC conversion circuit 1 through a positive bus BUS+ and a negative bus BUS-. The soft-start circuit 201 and the AC/DC conversion circuit 1 are separately connected to the power distribution system. The AC/DC conversion circuit 1 is connected to the photovoltaic apparatus and/or the energy storage apparatus through the positive bus BUS+ and the negative bus BUS-. One end of the DC/DC conversion circuit 1 is connected to a terminal device, and the other end of the DC/DC conversion circuit 1 is connected to the photovoltaic apparatus and/or the energy storage apparatus through the positive bus BUS+ and the negative bus BUS-. It may be understood that the power distribution system in this embodiment of this application may be, for example, a power grid or a power supply system. Therefore, a voltage output by the power distribution system may be referred to as a mains voltage.

In FIG. 6, there are a plurality of energy conversion paths. The following separately describes the cases:
Case 1: When the soft-start circuit 201 is connected to the power distribution system, the soft-start circuit 201 may receive a third voltage (namely, the mains voltage) from the power distribution system, perform power conversion on the third voltage, and input, under control of the control circuit 202, a third voltage obtained after power conversion to the AC/DC conversion circuit 1. The third voltage obtained after power conversion may be used to pre-charge a first capacitor disposed at an output end of the AC/DC conversion circuit 1. Specifically, as shown in FIG. 6, after the soft-start circuit 201 performs power conversion on the third voltage, the control circuit 202 may control the soft-start circuit 201 to input the third voltage obtained after power conversion to the AC/DC conversion circuit 1 through the positive bus BUS+ and the negative bus BUS-. It may be understood that in this embodiment of this application, "a process in which the third voltage obtained after power conversion is used to pre-charge the first capacitor disposed at the output end of the AC/DC conversion circuit 1" is a start process of the AC/DC conversion circuit 1.
Case 2: When the AC/DC conversion circuit 1 is connected to the power distribution system, and the DC/DC conversion circuit 1 is connected to the terminal device, the AC/DC conversion circuit 1 may receive a fourth voltage (namely, the mains voltage) from the power distribution system, perform power conversion on the fourth voltage, and input, under control of the control circuit 202, the fourth voltage obtained after power conversion to the DC/DC conversion circuit 1, so that the DC/DC conversion circuit may perform secondary power conversion on the fourth voltage obtained after power conversion, and output, under control of the control circuit 202, a fourth voltage obtained after secondary power conversion (namely, a charging voltage). In this way, the AC/DC conversion circuit 1 and the DC/DC conversion circuit 1 may implement conversion from the mains voltage (namely, the fourth voltage from the power distribution system) to the charging voltage (the fourth voltage obtained after secondary power conversion), so that the charging voltage provided by the charging apparatus 200 for the terminal device is adapted to a charging requirement of the terminal device. Specifically, as shown in FIG. 6, after performing power conversion on the fourth voltage, the AC/DC conversion circuit 1 may input, under control of the control circuit 202, the fourth voltage obtained after power conversion to the DC/DC conversion circuit 1 through the positive bus BUS+ and the negative bus BUS-.
Case 3: When the AC/DC conversion circuit 1 is connected to the power distribution system, and the AC/DC conversion circuit 1 is connected to the energy storage apparatus, the AC/DC conversion circuit 1 may receive a fifth voltage from the power distribution system, perform power conversion on the fifth voltage, and input, under control of the control circuit 202, the fifth voltage obtained after power conversion to the energy storage apparatus. The fifth voltage obtained after power conversion may charge the energy storage apparatus. This is also referred to as storing electric energy. In this way, the AC/DC conversion circuit 1 may implement energy conversion from the mains to the energy storage apparatus, so that the energy storage apparatus stores redundant electric energy in the power distribution system, to reduce unnecessary resource waste. Specifically, as shown in FIG. 6, after performing power conversion on the fifth voltage, the AC/DC conversion circuit 1 may input, under control of the control circuit 202, the fifth voltage obtained after power conversion to the energy storage apparatus through the positive bus BUS+ and the negative bus BUS-.
Case 4: When the DC/DC conversion circuit 1 is connected to the photovoltaic apparatus or the energy storage apparatus, and the DC/DC conversion circuit 1 is connected to the terminal device, the DC/DC conversion circuit 1 may receive a second voltage from the photovoltaic apparatus or the energy storage apparatus, perform power conversion on the second voltage, and output the second voltage obtained after power conversion (namely, a charging voltage) to the terminal device, to provide charging electric energy for the terminal device. Specifically, as shown in FIG. 6, the DC/DC conversion circuit 1 may receive the second voltage from the photovoltaic apparatus or the energy storage apparatus through the positive bus BUS+ and the negative bus BUS-.

The following describes specific implementations of circuits of parts in a charging apparatus 200.

### 1. Soft-start circuit 201.

In this embodiment of this application, an input end of the soft-start circuit 201 may be a single-phase input or a multi-phase input.

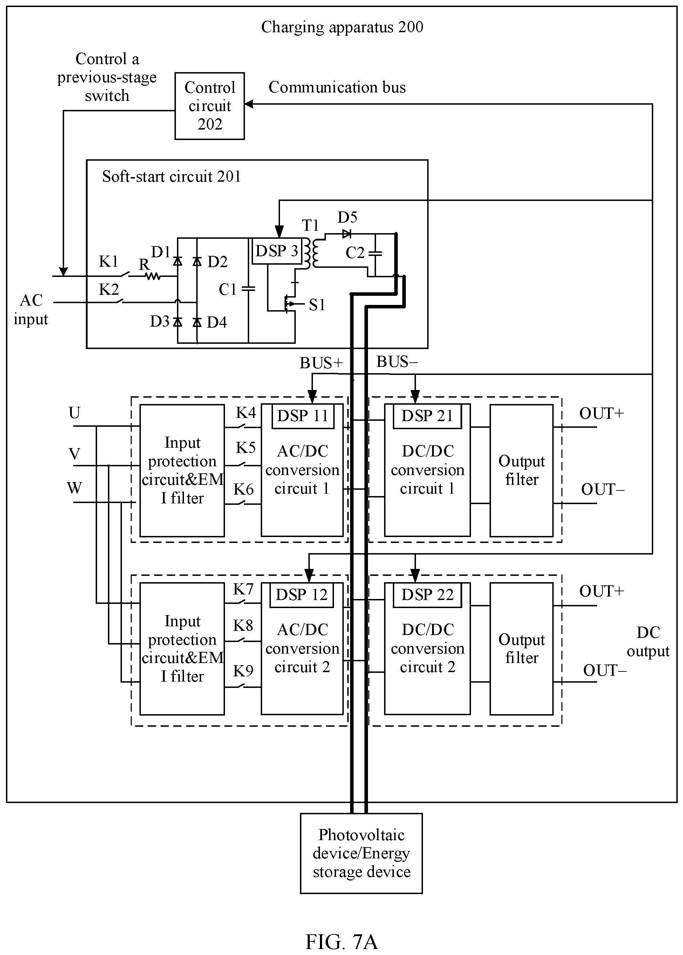

Example 1: Refer to FIG. 7A. The soft-start circuit 201 includes a switch K1, a switch K2, a resistor R, a diode D1, a diode D2, a diode D3, a diode D4, a diode D5, a capacitor C1, a capacitor C2, a transformer T1, a DSP 3, and a power switching transistor S1. The switch K1 and the switch K2 are used as previous-stage switches of the soft-start circuit 201. The control circuit 202 may control the switch K1 and the switch K2 to be turned onturned on or off, to control the soft-start circuit 201 to be turned on or off. Therefore, in FIG. 7A, the input end of the soft-start circuit 201 may be the single-phase input. In addition, the diode D1, the diode D2, the diode D3, the diode D4, the capacitor C1, and the power switching transistor S1 form a primary-side conversion circuit of the transformer T1, and the diode D5 and the capacitor C2 form a secondary-side conversion circuit of the transformer T1, so that the transformer T1 may perform power conversion on a voltage input to the soft-start circuit 201. The control circuit 202 may be communicated and interacted with the DSP 3 to control the power switch tube S1 to be turned on or off, to control a working state of the transformer T1.

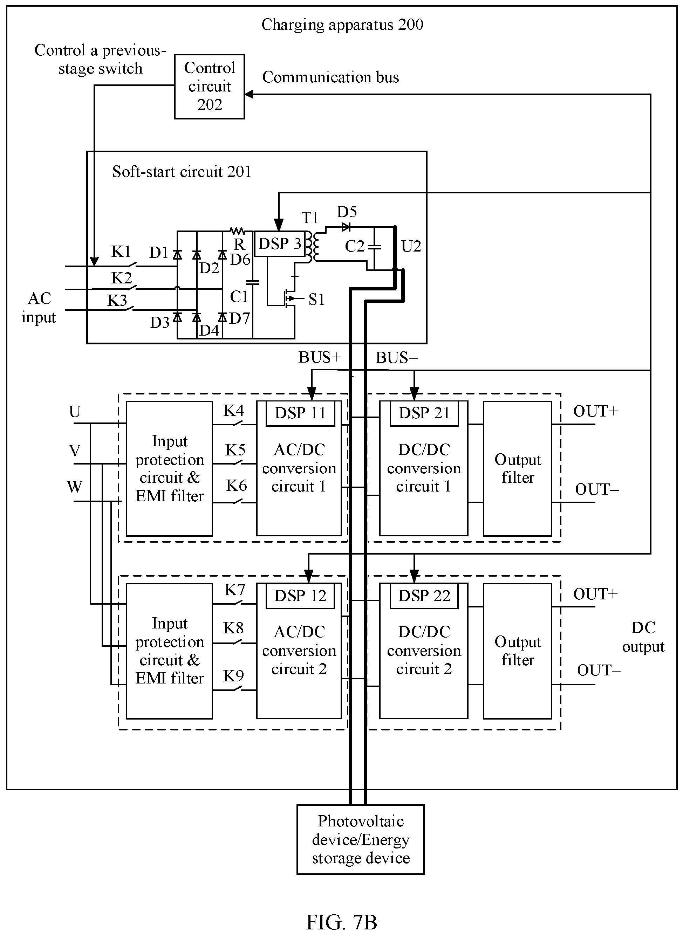

Example 2: Refer to FIG. 7B. The soft-start circuit 201 includes a switch K1, a switch K2, a switch K3, a resistor R, a diode D1, a diode D2, a diode D3, a diode D4, a diode D5, a diode D6, a diode D7, a capacitor C1, a capacitor C2, a transformer T1, a DSP 3, and a power switching transistor S1. The switch K1, the switch K2, and the switch K3 are used as previous-stage switches of the soft-start circuit 201. The control circuit 202 may control at least two of the switch K1, the switch K2, and the switch K3 to be turned on or off, to control the soft-start circuit 201 to be turned on or off. Therefore, in FIG. 7B, the input end of the soft-start circuit 201 may be a two-phase input or a three-phase input. In addition, the diode D1, the diode D2, the diode D3, the diode D4, the diode D6, the diode D7, the capacitor C1, and the power switching transistor S1 form a primary-side conversion circuit of the transformer T1, and the diode D5 and the capacitor C2 form a secondary-side conversion circuit of the transformer T1, so that the transformer T1 may perform power conversion on a voltage input to the soft-start circuit 201. Similarly, the control circuit 202 may be communicated and interacted with the DSP 3 to control the power switch tube S1 to be turned on or off, to control a working state of the transformer T1.

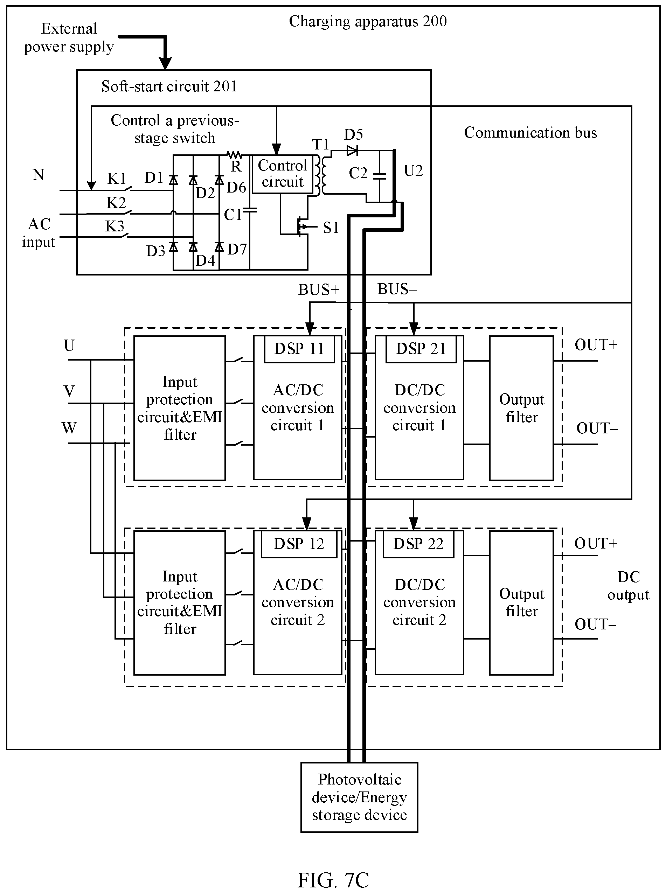

As shown in FIG. 7C, in some possible embodiments of this application, the control circuit 202 may not be separately disposed in the charging apparatus 200, and a control circuit 2011 may be disposed in the soft-start circuit 201, so that the control circuit 2011 in the soft-start circuit 201 may be communicated and interacted with a DSP 11, a DSP 12, a DSP 21, and a DSP 22 through a communication bus, to control start processes of an AC/DC conversion circuit 1, an AC/DC conversion circuit 2, a DC/DC conversion circuit 1, and a DC/DC conversion circuit 2. A communication interaction process of the control circuit 2011 and circuits in the charging apparatus 200 is similar to a communication interaction process of the control circuit 202 and the circuits of the charging apparatus 200. Refer to the foregoing related descriptions. Details are not described herein again. In addition, in FIG. 7C, the soft-start circuit 201 needs to receive an electrical signal from an external power supply. The external power supply is configured to supply power to the control circuit 2011 in the soft-start circuit 201.

2. Rectifier conversion circuit (namely, the foregoing AC/DC conversion circuit 1 and/or the foregoing AC/DC conversion circuit 2 described above).

In this embodiment of this application, the rectifier conversion circuit (namely, the AC/DC conversion circuit 1 or the AC/DC conversion circuit 2) may be any one of a full-bridge rectification structure, a three-phase Vienna rectifier structure, or the like. Specific hardware implementation of the rectifier conversion circuit may be implemented by using specific circuit components such as a resistor, a capacitor, and a switch.

Still refer to FIG. 7B. Input ends of the AC/DC conversion circuit 1 and the AC/DC conversion circuit 2 may include three phase lines: a first phase line U, a second phase line V, and a third phase line W, and each phase line is configured to receive a corresponding one-phase alternating current voltage, so that the AC/DC conversion circuit 1 and the AC/DC conversion circuit 2 may receive a three-phase alternating current voltage from a power distribution system (for example, a power grid). The three-phase alternating current voltage means three voltages with a same frequency, an equal potential amplitude, and a mutual phase difference of 120 degrees. In addition, a relay K4, a relay K5, and a relay K6 are disposed at the input end of the AC/DC conversion circuit 1. The control circuit 202 may control any two of the relay K4, the relay K5, and the relay K6 to control the AC/DC conversion circuit 1 to be turned on or off. Similarly, a relay K7, a relay K8, and a relay K9 are disposed at the input end of the AC/DC conversion circuit 2. The control circuit 202 may control any two of the relay K7, the relay K8, and the relay K9 to control the AC/DC conversion circuit 2 to be turned on or off.

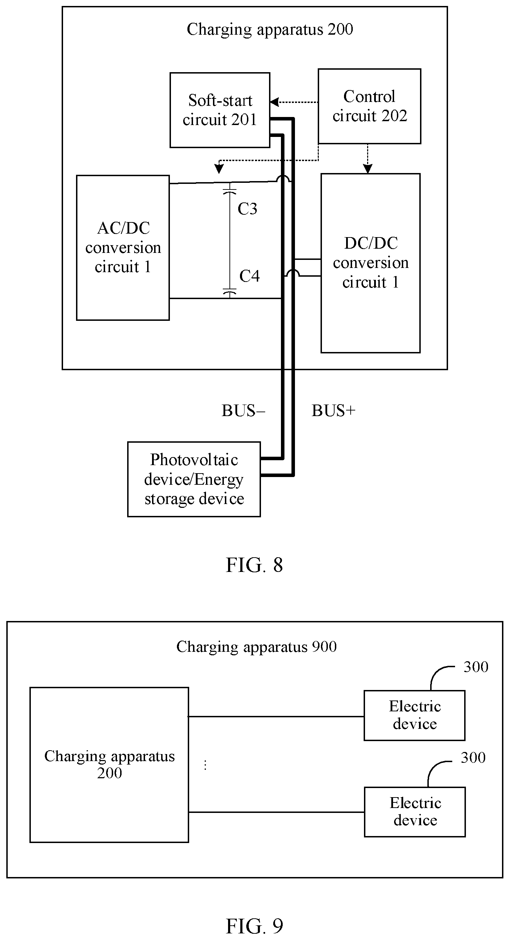

A first capacitor that is in the rectifier conversion circuit and that is configured to implement soft start may include one or more capacitors. This is not limited in this embodiment of this application. For example, as shown in FIG. 8, the AC/DC conversion circuit 1 is used as an example of the rectifier conversion circuit in the charging apparatus 200. The first capacitor disposed at an output end of the AC/DC conversion circuit 1 includes a capacitor C3 and a capacitor C4. Therefore, a soft-start circuit 201 receives a third voltage (namely, a mains voltage) from a power distribution system, performs power conversion on the third voltage, inputs, under control of the control circuit 202, a third voltage obtained after power conversion to the AC/DC conversion circuit 1 through the positive bus BUS+ and the negative bus BUS-, and then pre-charges the capacitor C3 and the capacitor C4 by using the third voltage obtained after power conversion, so that the soft start of the AC/DC conversion circuit 1 may be implemented.

### 3. DC/DC conversion circuit.

In this embodiment of this application, a DC/DC conversion circuit 1 or a DC/DC conversion circuit 2 may be any one of a full-bridge LLC structure, a half-bridge LLC structure, a flyback converter, or a buck conversion BUCK circuit. Specific hardware implementation of the DC/DC conversion circuit 1 or the DC/DC conversion circuit 2 may be implemented by using specific circuit components such as a resistor, a capacitor, and a switch.

It may be understood that a product form corresponding to the charging apparatus 200 in the foregoing embodiment may be, for example, a charging pile or a charging module.

Based on a same technical concept, an embodiment of this application further provides a charging pile. The charging pile includes the charging apparatus 200 described in the foregoing embodiment and at least one charging terminal that is connected to the charging apparatus 200. Each of the at least one charging terminal is configured to be connected to an electric device. Still refer to FIG. 2A. The apparatus 200 includes a positive bus BUS+, a negative bus BUS-, a DC/DC conversion circuit 1, and a soft-start circuit 201. The soft-start circuit is connected to an input end of the DC/DC conversion circuit through the positive bus BUS+ and the negative bus BUS-, and the input end of the DC/DC conversion circuit is further connected to a photovoltaic apparatus or an energy storage apparatus through the positive bus BUS+ and the negative bus BUS-. The soft-start circuit 201 is configured to pre-charge the positive bus BUS+ and the negative bus BUS-. The DC/DC conversion circuit 1 may be connected to a first charging terminal in at least one charging terminal. When a first voltage between the positive bus BUS+ and the negative bus BUS- is greater than or equal to a first threshold, the DC/DC conversion circuit 1 performs power conversion on a second voltage received from the photovoltaic apparatus or the energy storage apparatus, and outputs a second voltage obtained after power conversion to the first charging terminal, to charge an electric device that is connected to the first charging terminal. For example, the charging terminal may include a housing, a human-computer interaction interface, and the like. The charging terminal is configured to perform information interaction, energy transmission, and the like with the electric device. For example, the electric device may be, for example, an electric vehicle.

Based on a same technical concept, an embodiment of this application further provides a charging system 900. As shown in FIG. 9, the charging system includes the charging apparatus 200 described in the foregoing embodiments and an electric device 300. Still refer to FIG. 2A, the apparatus 200 includes the positive bus BUS+, the negative bus BUS-, the DC/DC conversion circuit 1, and the soft-start circuit 201. The soft-start circuit is connected to the input end of the DC/DC conversion circuit through the positive bus BUS+ and the negative bus BUS-, and the input end of the DC/DC conversion circuit is further connected to the photovoltaic apparatus or the energy storage apparatus through the positive bus BUS+ and the negative bus BUS-. The soft-start circuit 201 is configured to pre-charge the positive bus BUS+ and the negative bus BUS-. The DC/DC conversion circuit 1 may be connected to the electric device 300. When the first voltage between the positive bus BUS+ and the negative bus BUS- is greater than or equal to the first threshold, the DC/DC conversion circuit 1 performs power conversion on the second voltage received from the photovoltaic apparatus or the energy storage apparatus, and outputs the second voltage obtained after power conversion to the electric device 300, to charge the electric device 300. For example, the electric device 300 may be, for example, a vehicle, a mobile phone, or an intelligent wearable device.

It may be understood that there may be a plurality of DC/DC conversion circuits in the charging apparatus 200, and there may be more electric devices 300 in the charging system 900. Correspondingly, the charging apparatus 200 may be configured to charge the plurality of electric devices 300. For example, one DC/DC conversion circuit in the charging apparatus 200 is configured to charge one electric device 300. Alternatively, a plurality of DC/DC conversion circuits in the charging apparatus 200 are configured to charge one electric device 300.

It is clear that a person skilled in the art may make various modifications and variations to this application without departing from the scope of this application. In this way, this application is intended to cover these modifications and variations of this application provided that they fall within the scope of protection defined by the claims of this application.

## Claims

1. A charging apparatus (200), comprising a positive bus, a negative bus, a DC/DC conversion circuit, and a soft-start circuit (201), wherein the soft-start circuit (201) is connected to an input end of the DC/DC conversion circuit through the positive bus and the negative bus;
the soft-start circuit (201) is configured to pre-charge the positive bus and the negative bus;
the charging apparatus further comprises a rectifier conversion circuit, the rectifier conversion circuit includes an AC/DC conversion circuit, an output end of the soft-start circuit (201) is connected to an output end of the rectifier conversion circuit through the positive bus and the negative bus;
the soft-start circuit (201) is configured to: receive an electrical energy from a power distribution system, perform power conversion on the electrical energy, and input, an electrical energy obtained after power conversion, to a first capacitor disposed at the output end of the rectifier conversion circuit through the positive bus and the negative bus , wherein the electrical energy obtained after power conversion is used to pre-charge the first capacitor disposed at the output end of the rectifier conversion circuit;
the AC/DC conversion circuit and the DC/DC conversion circuit are configured to be started when a first voltage between the positive bus and the negative bus is greater than or equal to a first threshold, wherein the first voltage is equal to a voltage of the first capacitor, and **characterised in that**
the first threshold is greater than or equal to a peak value of a voltage output by the rectifier conversion circuit, and is less than an undervoltage protection point of the DC/DC conversion circuit; and
the peak voltage output by the rectifier conversion circuit is a peak value of a voltage output by the rectifier conversion circuit without being controlled.

2. The charging apparatus according to claim 1, wherein the charging apparatus further comprises a control circuit, the control circuit is connected to the soft-start circuit;
the control circuit is further configured to send a first control signal to the soft-start circuit, wherein the first control signal indicates to pre-charge the positive bus and the negative bus; and
that the soft-start circuit is configured to pre-charge the positive bus and the negative bus comprises: the soft-start circuit pre-charges the positive bus and the negative bus based on the first control signal.

3. The charging apparatus according to claim 2, wherein the soft-start circuit is further configured to:
send a first response signal to the control circuit when a first voltage between the positive bus and the negative bus is greater than or equal to the first threshold, wherein the first response signal indicates that the soft-start circuit is started.

4. The charging apparatus according to claim 3, wherein the control circuit is further connected to the DC/DC conversion circuit;
the control circuit is further configured to send a second control signal to the DC/DC conversion circuit when receiving the first response signal, wherein the second control signal indicates to start the DC/DC conversion circuit; and
the DC/DC conversion circuit is further configured to: receive the second control signal, be started based on the second control signal, and send a second response signal to the control circuit, wherein the second response signal indicates that the DC/DC conversion circuit is started.

5. The charging apparatus according to claim 4, wherein the control circuit is further configured to send a third control signal to the soft-start circuit when receiving the second response signal, wherein the third control signal indicates to disconnect the soft-start circuit.

6. The charging apparatus according to claim 3, wherein
the control circuit is further configured to send a fourth control signal to the rectifier conversion circuit when receiving the first response signal, wherein the fourth control signal indicates to start the rectifier conversion circuit;
the rectifier conversion circuit is configured to: receive the fourth control signal, be started based on the fourth control signal, and send a third response signal to the control circuit, wherein the third response signal indicates that the rectifier conversion circuit is started;
the control circuit is further configured to send a fifth control signal to the DC/DC conversion circuit when receiving the third response signal, wherein the fifth control signal indicates to start the DC/DC conversion circuit; and
the DC/DC conversion circuit is further configured to: receive the fifth control signal, be started based on the fifth control signal, and send a fourth response signal to the control circuit, wherein the fourth response signal indicates that the DC/DC conversion circuit is started.

7. The charging apparatus according to claim 6, wherein the control circuit is further configured to send a sixth control signal to the soft-start circuit when receiving the fourth response signal, wherein the sixth control signal indicates to disconnect the soft-start circuit.

8. The charging apparatus according to claim 7, wherein
the rectifier conversion circuit is configured to: receive a fourth voltage from the power distribution system, perform power conversion on the fourth voltage, and input, under control of the control circuit, the fourth voltage obtained after power conversion to the DC/DC conversion circuit, and
the DC/DC conversion circuit is configured to: perform secondary power conversion on the fourth voltage obtained after power conversion, and output, under control of the control circuit, the fourth voltage obtained after secondary power conversion

9. The charging apparatus according to claim 8, wherein the input end of the DC/DC conversion circuit is further connected to a photovoltaic apparatus or an energy storage apparatus through the positive bus and the negative bus;
the DC/DC conversion circuit is configured to: when the first voltage is greater than or equal to the first threshold, perform power conversion on a second voltage received from the photovoltaic apparatus or the energy storage apparatus, and output the second voltage obtained after power conversion

10. The charging apparatus according to claim 9, wherein
the rectifier conversion circuit is configured to: receive a fifth voltage from the power distribution system, perform power conversion on the fifth voltage, and input, under control of the control circuit, the fifth voltage obtained after power conversion to the energy storage apparatus.

11. A charging pile, comprising the charging apparatus according to any one of claims 1 to 10 and at least one charging terminal that is connected to the charging apparatus, wherein each of the at least one charging terminal is configured to be connected to an electric device.

## Patentansprüche

1. Ladevorrichtung (200),
umfassend einen positiven Bus, einen negativen Bus, eine DC/DC-Umwandlungsschaltung und eine Sanftanlaufschaltung (201), wobei die Sanftanlaufschaltung (201) mit einem Eingangsende der DC/DC-Umwandlungsschaltung über den positiven Bus und den negativen Bus verbunden ist;
die Sanftanlaufschaltung (201) dazu konfiguriert ist, den positiven Bus und den negativen Bus vorzuladen;
die Ladevorrichtung ferner eine Gleichrichterumwandlungsschaltung umfasst, die Gleichrichterumwandlungsschaltung eine AC/DC-Umwandlungsschaltung umfasst, ein Ausgangsende der Sanftanlaufschaltung (201) mit einem Ausgangsende der Gleichrichterumwandlungsschaltung über den positiven Bus und den negativen Bus verbunden ist;
die Sanftanlaufschaltung (201) zu Folgendem konfiguriert ist:
Empfangen einer elektrischen Energie von einem Leistungsverteilungssystem, Durchführen einer Leistungsumwandlung an der elektrischen Energie und Einspeisen einer elektrischen Energie, die nach der Leistungsumwandlung erlangt wird, in einen ersten Kondensator, der an dem Ausgangsende der Gleichrichterumwandlungsschaltung angeordnet ist, über den positiven Bus und den negativen Bus, wobei die elektrische Energie, die nach der Leistungsumwandlung erlangt wird, dazu verwendet wird, den ersten Kondensator vorzuladen, der an dem Ausgangsende der Gleichrichterumwandlungsschaltung angeordnet ist;
die AC/DC-Umwandlungsschaltung und die DC/DC-Umwandlungsschaltung dazu konfiguriert sind, gestartet zu werden, wenn eine erste Spannung zwischen dem positiven Bus und dem negativen Bus größer als ein erster Schwellenwert oder gleich diesem ist, wobei die erste Spannung gleich einer Spannung des ersten Kondensators ist, und **dadurch gekennzeichnet, dass**
der erste Schwellenwert größer als ein Spitzenwert einer Spannung, die durch die Gleichrichterumwandlungsschaltung ausgegeben wird, oder gleich diesem ist und kleiner als ein Unterspannungsschutzpunkt der DC/DC-Umwandlungsschaltung ist; und die Spitzenspannung, die durch die Gleichrichterumwandlungsschaltung ausgegeben wird, ein Spitzenwert einer Spannung ist, die durch die Gleichrichterumwandlungsschaltung ausgegeben wird, ohne gesteuert zu werden.

2. Ladevorrichtung nach Anspruch 1, wobei die Ladevorrichtung ferner eine Steuerschaltung umfasst und die Steuerschaltung mit der Sanftanlaufschaltung verbunden ist;
die Steuerschaltung ferner dazu konfiguriert ist, ein erstes Steuersignal an die Sanftanlaufschaltung zu senden, wobei das erste Steuersignal angibt, den positiven Bus und den negativen Bus vorzuladen; und wobei,
dass die Sanftanlaufschaltung dazu konfiguriert ist, den positiven Bus und den negativen Bus zu laden, Folgendes umfasst: die Sanftanlaufschaltung lädt den positiven Bus und den negativen Bus basierend auf dem ersten Steuersignal vor.

3. Ladevorrichtung nach Anspruch 2, wobei die Sanftanlaufschaltung ferner zu Folgendem konfiguriert ist:
Senden eines ersten Antwortsignals an die Steuerschaltung, wenn eine erste Spannung zwischen dem positiven Bus und dem negativen Bus größer als der erste Schwellenwert oder gleich diesem ist, wobei das erste Antwortsignal angibt, dass die Sanftanlaufschaltung gestartet ist.

4. Ladevorrichtung nach Anspruch 3, wobei die Steuerschaltung ferner mit der DC/DC-Umwandlungsschaltung verbunden ist;
die Steuerschaltung ferner dazu konfiguriert ist, ein zweites Steuersignal an die DC/DC-Umwandlungsschaltung zu senden, wenn sie das erste Antwortsignal empfängt, wobei das zweite Steuersignal angibt, die DC/DC-Umwandlungsschaltung zu starten; und
die DC/DC-Umwandlungsschaltung ferner zu Folgendem konfiguriert ist: Empfangen des zweiten Steuersignals, Gestartetwerden basierend auf dem zweiten Steuersignal und Senden eines zweiten Antwortsignals an die Steuerschaltung, wobei das zweite Antwortsignal angibt, dass die DC/DC-Umwandlungsschaltung gestartet ist.

5. Ladevorrichtung nach Anspruch 4, wobei die Steuerschaltung ferner dazu konfiguriert ist, ein drittes Steuersignal an die Sanftanlaufschaltung zu senden, wenn sie das zweite Antwortsignal empfängt, wobei das dritte Steuersignal angibt, die Sanftanlaufschaltung zu trennen.

6. Ladevorrichtung nach Anspruch 3, wobei
die Steuerschaltung ferner dazu konfiguriert ist, ein viertes Steuersignal an die Gleichrichterumwandlungsschaltung zu senden, wenn sie das erste Antwortsignal empfängt, wobei das vierte Steuersignal angibt, die Gleichrichterumwandlungsschaltung zu starten;
die Gleichrichterumwandlungsschaltung zu Folgendem konfiguriert ist: Empfangen des vierten Steuersignals, Gestartetwerden basierend auf dem vierten Steuersignal und Senden eines dritten Antwortsignals an die Steuerschaltung, wobei das dritte Antwortsignal angibt, dass die Gleichrichterumwandlungsschaltung gestartet ist;
die Steuerschaltung ferner dazu konfiguriert ist, ein fünftes Steuersignal an die DC/DC-Umwandlungsschaltung zu senden, wenn sie das dritte Antwortsignal empfängt, wobei das fünfte Steuersignal angibt, die DC/DC-Umwandlungsschaltung zu starten; und
die DC/DC-Umwandlungsschaltung ferner zu Folgendem konfiguriert ist: Empfangen des fünften Steuersignals, Gestartetwerden basierend auf dem fünften Steuersignal und Senden eines vierten Antwortsignals an die Steuerschaltung, wobei das vierte Antwortsignal angibt, dass die DC/DC-Umwandlungsschaltung gestartet ist.

7. Ladevorrichtung nach Anspruch 6, wobei die Steuerschaltung ferner dazu konfiguriert ist, ein sechstes Steuersignal an die Sanftanlaufschaltung zu senden, wenn sie das vierte Antwortsignal empfängt, wobei das sechste Steuersignal angibt, die Sanftanlaufschaltung zu trennen.

8. Ladevorrichtung nach Anspruch 7, wobei
die Gleichrichterumwandlungsschaltung zu Folgendem konfiguriert ist: Empfangen einer vierten Spannung von dem Leistungsverteilungssystem, Durchführen einer Leistungsumwandlung an der vierten Spannung und Einspeisen, unter Steuerung der Steuerschaltung, der vierten Spannung, die nach Leistungsumwandlung erlangt wird, in die DC/DC-Umwandlungsschaltung; und
die DC/DC-Umwandlungsschaltung zu Folgendem konfiguriert ist: Durchführen einer sekundären Leistungsumwandlung an der vierten Spannung, die nach Leistungsumwandlung erlangt wird, und Ausgeben, unter Steuerung der Steuerschaltung, der vierten Spannung, die nach der sekundären Leistungsumwandlung erlangt wird.

9. Ladevorrichtung nach Anspruch 8, wobei das Eingangsende der DC/DC-Umwandlungsschaltung ferner mit einer Photovoltaikvorrichtung oder einer Energiespeichervorrichtung über den positiven Bus und den negativen Bus verbunden ist;
die DC/DC-Umwandlungsschaltung zu Folgendem konfiguriert ist: wenn die erste Spannung größer als der erste Schwellenwert oder gleich diesem ist, Durchführen einer Leistungsumwandlung an einer zweiten Spannung, die von der Photovoltaikvorrichtung oder der Energiespeichervorrichtung empfangen wird, und Ausgeben der zweiten Spannung, die nach der Leistungsumwandlung erlangt wird.

10. Ladevorrichtung nach Anspruch 9, wobei
die Gleichrichterumwandlungsschaltung zu Folgendem konfiguriert ist: Empfangen einer fünften Spannung von dem Leistungsverteilungssystem, Durchführen einer Leistungsumwandlung an der fünften Spannung und Einspeisen, unter Steuerung der Steuerschaltung, der fünften Spannung, die nach Leistungsumwandlung erlangt wird, in die Energiespeichervorrichtung.

11. Ladesäule, umfassend die Ladevorrichtung nach einem der Ansprüche 1 bis 10 und mindestens einen Ladeanschluss, der mit der Ladevorrichtung verbunden ist, wobei jeder des mindestens einen Ladeanschlusses dazu konfiguriert ist, mit einem elektrischen Gerät verbunden zu werden.

## Revendications

1. Appareil de charge (200),
comprenant un bus positif, un bus négatif, un circuit de conversion CC/CC et un circuit de démarrage progressif (201), dans lequel le circuit de démarrage progressif (201) est connecté à une extrémité d'entrée du circuit de conversion CC/CC via le bus positif et le bus négatif ;
le circuit de démarrage progressif (201) est configuré pour précharger le bus positif et le bus négatif ;
l'appareil de charge comprend également un circuit de conversion redresseur, le circuit de conversion redresseur comporte un circuit de conversion CA/CC, une extrémité de sortie du circuit de démarrage progressif (201) est connectée à une extrémité de sortie du circuit de conversion redresseur via le bus positif et le bus négatif ;
le circuit de démarrage progressif (201) est configuré pour : recevoir une énergie électrique d'un système de distribution de puissance, effectuer une conversion de puissance sur l'énergie électrique, et entrer, une énergie électrique obtenue après conversion de puissance, dans un premier condensateur disposé à l'extrémité de sortie du circuit de conversion redresseur via le bus positif et le bus négatif, dans lequel l'énergie électrique obtenue après conversion de puissance est utilisée pour précharger le premier condensateur disposé à l'extrémité de sortie du circuit de conversion redresseur ;
le circuit de conversion CA/CC et le circuit de conversion CC/CC sont configurés pour être démarrés lorsqu'une première tension entre le bus positif et le bus négatif est supérieure ou égale à un premier seuil, dans lequel la première tension est égale à une tension du premier condensateur, et **caractérisé en ce que** le premier seuil est supérieur ou égal à une valeur de crête d'une tension délivrée par le circuit de conversion redresseur, et est inférieur à un point de protection contre les sous-tensions du circuit de conversion CC/CC ; et
la tension de crête délivrée par le circuit de conversion redresseur est une valeur de crête d'une tension délivrée par le circuit de conversion redresseur sans être commandée.

2. Appareil de charge selon la revendication 1, dans lequel l'appareil de charge comprend également un circuit de commande, le circuit de commande est connecté au circuit de démarrage progressif ;
le circuit de commande est également configuré pour envoyer un premier signal de commande au circuit de démarrage progressif, dans lequel le premier signal de commande indique de précharger le bus positif et le bus négatif ; et
le fait que le circuit de démarrage progressif soit configuré pour précharger le bus positif et le bus négatif comprend : le circuit de démarrage progressif précharge le bus positif et le bus négatif sur la base du premier signal de commande.

3. Appareil de charge selon la revendication 2, dans lequel le circuit de démarrage progressif est également configuré pour :
envoyer un premier signal de réponse au circuit de commande lorsqu'une première tension entre le bus positif et le bus négatif est supérieure ou égale au premier seuil, dans lequel le premier signal de réponse indique que le circuit de démarrage progressif est démarré.

4. Appareil de charge selon la revendication 3, dans lequel le circuit de commande est également connecté au circuit de conversion CC/CC ;
le circuit de commande est également configuré pour envoyer un second signal de commande au circuit de conversion CC/CC lors de la réception du premier signal de réponse, dans lequel le deuxième signal de commande indique de démarrer le circuit de conversion CC/CC ; et
le circuit de conversion CC/CC est également configuré pour : recevoir le deuxième signal de commande, être démarré sur la base du deuxième signal de commande, et envoyer un deuxième signal de réponse au circuit de commande, dans lequel le deuxième signal de réponse indique que le circuit de conversion CC/CC est démarré.

5. Appareil de charge selon la revendication 4, dans lequel le circuit de commande est également configuré pour envoyer un troisième signal de commande au circuit de démarrage progressif lors de la réception du deuxième signal de réponse, dans lequel le troisième signal de commande indique de déconnecter le circuit de démarrage progressif.

6. Appareil de charge selon la revendication 3, dans lequel le circuit de commande est également configuré pour envoyer un quatrième signal de commande au circuit de conversion redresseur lors de la réception du premier signal de réponse, dans lequel le quatrième signal de commande indique de démarrer le circuit de conversion redresseur ;
le circuit de conversion redresseur est configuré pour : recevoir le quatrième signal de commande, être démarré sur la base du quatrième signal de commande et envoyer un troisième signal de réponse au circuit de commande, dans lequel le troisième signal de réponse indique que le circuit de conversion redresseur est démarré ;
le circuit de commande est également configuré pour envoyer un cinquième signal de commande au circuit de conversion CC/CC lors de la réception du troisième signal de réponse, dans lequel le cinquième signal de commande indique de démarrer le circuit de conversion CC/CC ; et
le circuit de conversion CC/CC est également configuré pour : recevoir le cinquième signal de commande, être démarré sur la base du cinquième signal de commande, et envoyer un quatrième signal de réponse au circuit de commande, dans lequel le quatrième signal de réponse indique que le circuit de conversion CC/CC est démarré.

7. Appareil de charge selon la revendication 6, dans lequel le circuit de commande est également configuré pour envoyer un sixième signal de commande au circuit de démarrage progressif lors de la réception du quatrième signal de réponse, dans lequel le sixième signal de commande indique de déconnecter le circuit de démarrage progressif.

8. Appareil de charge selon la revendication 7, dans lequel
le circuit de conversion redresseur est configuré pour : recevoir une quatrième tension du système de distribution de puissance, effectuer une conversion de puissance sur la quatrième tension et entrer, sous la commande du circuit de commande, la quatrième tension obtenue après conversion de puissance dans le circuit de conversion CC/CC ; et
le circuit de conversion CC/CC est configuré pour : effectuer une conversion de puissance secondaire sur la quatrième tension obtenue après conversion de puissance, et délivrer, sous la commande du circuit de commande, la quatrième tension obtenue après conversion de puissance secondaire.

9. Appareil de charge selon la revendication 8, dans lequel l'extrémité d'entrée du circuit de conversion CC/CC est également connectée à un appareil photovoltaïque ou à un appareil de stockage de puissance via le bus positif et le bus négatif ;
le circuit de conversion CC/CC est configuré pour : lorsque la première tension est supérieure ou égale au premier seuil, effectuer une conversion de puissance sur une seconde tension reçue de l'appareil photovoltaïque ou de l'appareil de stockage d'énergie, et délivrer la seconde tension obtenue après conversion de puissance.

10. Appareil de charge selon la revendication 9, dans lequel le circuit de conversion redresseur est configuré pour : recevoir une cinquième tension du système de distribution de puissance, effectuer une conversion de puissance sur la cinquième tension et entrer, sous la commande du circuit de commande, la cinquième tension obtenue après conversion de puissance vers l'appareil de stockage d'énergie.

11. Pile de charge, comprenant l'appareil de charge selon l'une quelconque des revendications 1 à 10 et au moins une borne de charge qui est connectée à l'appareil de charge, dans laquelle chacune des au moins une borne de charge est configurée pour être connectée à un dispositif électrique.
